# EUROPEAN PATENT APPLICATION

(11) **EP 4 746 096 A1**
(43) Date of publication of application: **20.05.2026**
(21) Application number: 23948915.6
(22) Date of filing: 24.08.2023
(51) Int. Cl.: H01M 10/0525, H01M 10/058, H01M 10/42, H01M 10/0562, H01M 50/449, H01M 4/13

(54) **POSITIVE ELECTRODE SHEET, AND PREPARATION METHOD THEREFOR AND USE THEREOF**

(30) Priority: 16.08.2023 CN 202311032716
(71) Applicant: HS Battery Technology, Dongguan, Guangdong 523000 (CN)
(72) Inventor: JIN, Zhou, Dongguan, Guangdong 523000 (CN); HUANG, Xuejie, Dongguan, Guangdong 523000 (CN); YAN, Yong, Dongguan, Guangdong 523000 (CN); ZHAN, Yuanjie, Dongguan, Guangdong 523000 (CN); MA, Xiaowei, Dongguan, Guangdong 523000 (CN); HU, Baoping, Dongguan, Guangdong 523000 (CN)
(74) Representative: Meyer, Thorsten
(86) International application number: PCT/CN2023/114585
(87) International publication number: WO 2025/035488

(57) **Abstract**

The present disclosure discloses a cathode sheet, and a preparation method and a use thereof, and belongs to the technical field of lithium battery energy storage. Besides a current collector and an active material layer as conventionally known, the cathode sheet also comprises a lithium replenishment layer and an isolation layer, which are introduced into a structure of the cathode sheet in a specific order. After the cathode sheet, together with an electrolyte and an anode sheet, is assembled into a lithium battery energy storage device, the lithium replenishment layer and the isolation layer can effectively replenish lithium and form a stable SEI layer, and avoid a reaction between an active material and a prelithiation agent or a resulting lithium replenishment product in the lithium replenishment layer, thereby achieving excellent electrochemical performance for the cathode sheet. Besides, the preparation method is simple and can achieve an industrial scale production.

## Description

### TECHNICAL FIELD

The present disclosure relates to the field of lithium battery energy storage, and in particular to a cathode sheet, and a preparation method and a use thereof.

### BACKGROUND

During an initial charging and discharging process, a lithium battery energy storage device will generate a solid electrolyte interphase (SEI) layer on an anode interface, resulting in deactivation of a part of active lithium materials and irreversible capacity loss. Therefore, lithium replenishment is generally required for the lithium battery energy storage device. An existing common lithium replenishment process is performed by adding a certain quantity of lithium-containing compounds to an active material layer when a cathode sheet of the lithium battery energy storage device is prepared. These lithium-containing compounds will replenish a certain quantity of lithium ions, during the charging and discharging process of the lithium battery energy storage device.

However, the lithium-containing compounds have poor stability in the air. When exposed to the air, the lithium-containing compounds will easily react with moisture and carbon dioxide in the air and get deteriorated, and they may even directly affect active materials in the cathode sheet, thereby failing to achieve a lithium replenishment effect as expected and causing a significant reduction in electrochemical performance for the lithium battery energy storage device.

### SUMMARY OF THE DISCLOSURE

Based on defects in the prior art, an objective of the present disclosure is to provide a cathode sheet. In addition to a current collector and an active material layer as conventionally known, the cathode sheet also comprises a lithium replenishment layer and an isolation layer, which are introduced into a structure of the cathode sheet in a specific order. After the cathode sheet, together with an electrolyte and an anode sheet, is assembled into a lithium battery energy storage device, the lithium replenishment layer and the isolation layer not only can effectively replenish lithium and form a stable SEI layer, but also can avoid a reaction between an active material and a prelithiation agent or a resulting lithium replenishment product thereof in the lithium replenishment layer, thereby achieving excellent electrochemical performance for the cathode sheet.

In order to achieve the above objective, the present disclosure provides a technical solution as follows.

A cathode sheet is provided, wherein the cathode sheet comprises a current collector, an active material layer, an isolation layer and a cathode lithium replenishment layer, which are stacked in sequence;
the isolation layer comprises at least one selected from the group consisting of a conductive agent, a solid electrolyte, and a polyanionic phosphate;
the cathode lithium replenishment layer comprises a lithium-containing compound and a reducing agent.

In existing processes, in order to replenish lithium for a cathode sheet, a prelithiation agent is usually added to an active material layer. However, such processes have been verified to have an unsatisfied effect. Although the prelithiation agent can effectively provide additional lithium ions for the active material layer, the active material will still be in direct contact with the electrolyte to quickly form a SEI layer, so lithium ion conductivity of the resulting lithium battery energy storage device is still constrained by the formation of the SEI layer. At the same time, the prelithiation agent itself may also react with the electrolyte, or even react with the active material. In particular, some products generated in these reactions, such as oxygen, may cause oxidation of the active material. Ultimately, the prelithiation agent will not only fail to achieve an effective lithium replenishment effect, but may even cause a rapid attenuation of the capacity and the cycling performance for the lithium battery energy storage device. Therefore, in the technical solution of the present disclosure, the cathode sheet adopts a structural arrangement of a current collector-an active material layer-an isolation layer-a cathode lithium replenishment layer. When the cathode sheet is applied in a lithium battery energy storage device, on the one hand, the active material layer and the cathode lithium replenishment layer realize electronic conduction under the action of the current collector. During the charging process, the active material in the active material layer and the lithium-containing compound in the cathode lithium replenishment layer are both delithiated, thereby realizing lithium replenishment. At this moment, the cathode lithium replenishment layer will produce a certain amount of residual substances, which cooperate with the isolation layer to prevent the active material layer from directly contacting the electrolyte. Therefore, the SEI layer on the surface of the cathode sheet has higher stability and the lithium battery energy storage device achieves better cycling stability. On the other hand, the isolation layer located between the active material layer and the cathode lithium replenishment layer comprises at least one selected from the group consisting of a conductive agent, a solid electrolyte and a polyanionic phosphate, which significantly improves ionic/electronic conductivity of the cathode sheet. Most importantly, the isolation layer can effectively prevent a direct contact between the active material layer and the cathode lithium replenishment layer, so that the lithium-containing compound and the reducing agent in the cathode lithium replenishment layer will not subject to side reactions with the active material, and the resulting reaction products generated in the cathode lithium replenishment layer during the lithium replenishment process can also be prevented from reacting with the active material. On this basis, the reducing agent in the cathode lithium replenishment layer can fully reduce the potential of the lithium-containing compound during the lithium replenishment process, thereby further improving lithium replenishment performance of the lithium-containing compound, without worrying that an excessive reaction affects original efficiency of lithiation/delithiation for the active material layer.

Preferably, the active material layer comprises a cathode active material, which is a doped or undoped material and comprises at least one selected from the group consisting of lithium cobalt oxide, lithium nickel oxide, lithium manganese oxide, a ternary cathode material, lithium nickel manganese oxide, and a lithium-rich material.

The cathode sheet of the present disclosure is applicable to various kinds of existing common cathode active material systems. The main reason is that in the technical solution of the present disclosure, not only the prelithiation agent and the active material are separated in different layers, but also an isolation layer is configured between the two layers. Thus, no matter what the delithiation rate and/or lithiation rate of the active material is/are, the efficiency of lithium replenishment of the cathode lithium replenishment layer will not be affected.

More preferably, the active material layer also comprises a conductive agent and a binder.

Preferably, the conductive agent is at least one selected from the group consisting of conductive carbon black, a carbon nanotube, graphene and a carbon nanofiber; the solid electrolyte is at least one selected from the group consisting of an oxide solid electrolyte, a chloride solid electrolyte and a polymer solid electrolyte; and the polyanionic phosphate is at least one selected from the group consisting of lithium iron phosphate (LiFePO₄), lithium manganese phosphate (LiMnPO₄), lithium manganese iron phosphate (LiMnₓFe₁₋ₓPO₄, where 0<x< 1), lithium vanadium phosphate (Li₃V₂(PO₄)₃), lithium cobalt phosphate (LiCoPO₄) and lithium nickel phosphate (LiNiPO₄).

More preferably, the isolation layer comprises a conductive agent and a solid electrolyte.

More preferably, the conductive agent is a carbon nanotube, and the solid electrolyte is a lithium aluminum titanium phosphate (LATP) solid electrolyte with a sodium superionic conductor (NaSICON) type structure.

More preferably, the isolation layer comprises a carbon nanotube and a LATP solid electrolyte, and a mass ratio of the carbon nanotube to the LATP solid electrolyte is in a range of from (1:9) to (4:6).

The inventors found that, during the lithium replenishment process and cycling process of the cathode sheet, the conductive agent, the solid electrolyte and the polyanionic phosphate in the isolation layer each can effectively improve lithium ionic/electronic conductivity of the cathode sheet when used alone. When different conductive agents and/or different solid electrolytes are applied in lithium battery energy storage devices, these lithium battery energy storage devices have different charge capacity, different discharge capacity and different cycling stability. When the conductive agent is a carbon nanotube and the solid electrolyte is a LATP solid electrolyte, the cathode sheet has better electrochemical performance; especially, when the conductive agent and the solid electrolyte are used in combination at the preferable ratio mentioned above, the cathode sheet can exhibit optimal electrochemical activity.

Preferably, the solid electrolyte comprises a coated solid electrolyte.

It should be noted that, when the conductive agent and the solid electrolyte are used in combination in the isolation layer of the present disclosure, they can be existed in the form of mixed powders, or in the form of combined layers. That is, the conductive agent in the isolation layer can be existed in a layered form or in a powdered form, and the solid electrolyte can be combined to a surface of the conductive agent in a layered form or in a powdered form. The same applies to the conductive agent and the solid electrolyte, when their positions are exchanged. Those skilled in the art should be aware that the combination form is actually related to conventional original forms of the conductive agent and the solid electrolyte, and a difference in the combination form does not affect the performance of the cathode sheet ultimately.

Preferably, the isolation layer also comprises a binder.

Preferably, the lithium-containing compound is LiₐM_{b}O_{c}, where a=1-12, M is at least one selected from the group consisting of Ni, Cu, Mo, V, Ru, Mn, Si, Nb, Ti, Fe, Ta, Re, Co, W, Zr, Bi, Sn and Ce, b=0-2, and c=0-11.

More preferably, the lithium-containing compound is at least one selected from the group consisting of LiO₂, Li₂O, Li₂O₂, Li₂NiO₂, Li₂CuO₂, Li₂MoO₃, Li₂VO₃, Li₂RuO₃, Li₂MnO₃, Li₂SiO₃, Li₂Si₂O₅, Li₃VO₄, Li₃NbO₄, Li₃RuO₄, Li₃PO4, Li₄SiO₄, Li₄TiO₄, Li₅FeO₄, Li₅NbO₅, Li₅TaO₅, Li₅ReO₆, Li₆CoO₄, Li₆MnO₄, Li₆NiO₄, Li₆WO₆, Li₆Zr₂O₇, Li₇NbO₆, Li₇VO₆, Li₇BiO₆, Li₇TaO₆, Li₈ZrO₆, Li₈SnO₆, Li₈SiO₆, Li₈CeO₆, Li₈MoO₆, Li₈MnO₆, Li₈Nb₂O₉ and Li₁₂Nb₂O₁₁.

Preferably, the reducing agent is at least one selected from the group consisting of boride, sulfide, phosphide and a reducing elementary substance.

More preferably, the boride is at least one selected from the group consisting of cobalt boride, molybdenum boride, calcium boride, aluminum boride, magnesium boride, titanium boride, zirconium boride, silicon boride and lanthanum boride; the sulfide is at least one selected from the group consisting of sodium sulfide, iron sulfide, cobalt sulfide, molybdenum sulfide, tungsten sulfide, titanium sulfide, magnesium sulfide, calcium sulfide, copper sulfide, lanthanum sulfide, zinc sulfide, tin sulfide, nickel sulfide and silicon sulfide; the phosphide is at least one selected from the group consisting of iron phosphide, boron phosphide, nickel phosphide, sodium phosphide and zinc phosphide; the reducing elementary substance is at least one selected from the group consisting of elemental sulfur, elemental phosphorus, elemental boron, elemental silicon, elemental aluminum, elemental germanium, elemental arsenic, elemental iodine, elemental vanadium, elemental manganese, elemental iron, elemental cobalt, elemental nickel and elemental tin.

Preferably, the cathode lithium replenishment layer also comprises a conductive agent and a binder.

Preferably, the cathode active material is a ternary cathode material and/or a lithium nickel manganese oxide; the cathode lithium replenishment layer comprises Li₄SiO₄ and elemental sulfur.

Preferably, the cathode lithium replenishment layer may also comprise a phosphate-based cathode material or an electrolyte.

More preferably, the cathode lithium replenishment layer comprises following components by weight: 80 to 96 parts of the lithium-containing compound and the reducing agent, 2 to 10 parts of the conductive agent, and 2 to 10 parts of the binder.

It should be noted that, except for the isolation layer defined in the present disclosure, the conductive agent involved in the remaining layers is not particularly defined, and can be a self-made or commercially available conductive agent selected by those skilled in the art according to actual conditions, and includes, but not limited to, acetylene black, carbon black, a carbon fiber, a carbon nanotube and Ketjen black; the binder used in each layer can also be a self-made or commercially available binder selected according to actual conditions, and includes, but not limited to, polyvinyl pyrrolidone, polyvinylidene fluoride, polyethylene oxide, polytetrafluoroethylene, carboxymethyl cellulose and a copolymer of styrene and butadiene.

Preferably, in the cathode sheet, a thickness of the active material layer is in a range of from 20 µm to 300 µm, a thickness of the isolation layer is in a range of from 0.5 µm to 20 µm, and a thickness of the cathode lithium replenishment layer is in a range of from 1 µm to 50 µm.

According to actual requirements, structural layers with different thicknesses can be configured in the cathode sheet by those skilled in the art, so that the cathode sheet can be applicable to lithium energy storage devices with different cathode active materials and different electrolyte systems.

Preferably, the current collector is an aluminum foil.

Another objective of the present disclosure is to provide a preparation method of the cathode sheet, comprising following steps:
fabricating the active material layer on the current collector;
fabricating the isolation layer on the active material layer;
fabricating the cathode lithium replenishment layer on the isolation layer.

Preferably, the active material layer is fabricated on the current collector, by coating, dipping, spraying, preparing a composite membrane and/or rolling, pressing in a dry electrode processing method and/or bonding.

Preferably, the isolation layer is fabricated on the active material layer, by coating, dipping, spraying, preparing a composite membrane and/or rolling, pressing in a dry electrode processing method and/or bonding.

Preferably, the cathode lithium replenishment layer is fabricated on the isolation layer by coating, dipping, spraying, preparing a composite membrane and/or rolling, pressing in a dry electrode processing method and/or bonding.

Another objective of the present disclosure is to provide a secondary battery, comprising the cathode sheet of the present disclosure, a separator and an anode sheet.

When the cathode sheet of the present disclosure is applied to a secondary battery, an active lithium content in the secondary battery is effectively supplemented, and the active material in the cathode sheet will not be affected by the lithium replenishment material. After the initial charge and discharge, not only a stable SEI layer can be formed, but also the energy density of the secondary battery is effectively improved due to the lithium replenishment. Thus, the secondary battery has the features of high specific capacity, high rate performance and high cycling stability.

It should be noted that the anode sheet and the separator in the secondary battery can be made of conventional materials in the art; a preparation method of the secondary battery can be a conventional one in the art.

Yet another objective of the present disclosure is to provide an electric device, comprising the secondary battery of the present disclosure, wherein the secondary battery is used as a power supply for the electric device.

The present disclosure has the following beneficial effects. As disclosed in the present disclosure, in addition to a current collector and an active material layer as conventionally known, a cathode sheet also comprises a lithium replenishment layer and an isolation layer, which are introduced into a structure of the cathode sheet in a specific order. After the cathode sheet, together with an electrolyte and an anode sheet, is assembled into a lithium battery energy storage device, the lithium replenishment layer and the isolation layer not only can effectively replenish lithium and form a stable SEI layer, but also can avoid a reaction between an active material and a prelithiation agent or a resulting lithium replenishment product thereof in the lithium replenishment layer, thereby achieving excellent electrochemical performance for the cathode sheet. Besides, the preparation method of the cathode sheet is simple and can achieve an industrial scale production.

### DETAILED DESCRIPTION

For better illustration of the objectives, technical solutions and advantages of the present disclosure, the present disclosure will be further described in conjunction with specific examples and comparative examples. These examples are intended to understand the contents of the present disclosure in detail, rather than to restrict the present disclosure. All other embodiments obtained by those skilled in the art, without creative work, fall within a protection scope of the present disclosure. Unless otherwise specified, experimental reagents and instruments involved in the implementation of the present disclosure are all ordinary ones that are commonly used.

In each of the examples and comparative examples, the carbon nanotube is conductive paste, LB120-50, available from Jiangsu Cnano Technology Co., Ltd., China;
the graphene is available from Jiangsu XFnano Materials Tech Co., Ltd., China;
the carbon fiber is available from Guangdong Canrd New Energy Technology Co., Ltd., China;
the lithium lanthanum zirconium oxide (LLZO) solid electrolyte is available from Ganfeng Lithium Group Co., Ltd., China;
the LATP solid electrolyte is available from Ganfeng Lithium Group Co., Ltd., China;
the polyethylene oxide (PEO) solid electrolyte is available from Beijing InnoChem Science & Technology Co., Ltd.;
other raw materials or additives not mentioned above are all commercially available, and the raw materials or additives used in parallel experiments of each example and each comparative example are all of the same type.

### Examples 1-24

Examples of the cathode sheet and the preparation method thereof of the present disclosure were provided, and the preparation method of the cathode sheet in each of Examples 1-24 included the following steps.
(1) fabricating an active material layer on a 12 µm aluminum foil. A preparation method of the active material layer included the following steps: weighting and mixing a cathode active material, a conductive agent, i.e., conductive carbon black Super-P and a binder, i.e., PVDF, which were all commercially available, at a mass ratio of 95:2:3, and then adding N-methylpyrrolidone (NMP) to prepare a slurry, which was coated on the aluminum foil and then dried to obtain the active material layer.
(2) fabricating an isolation layer on a surface of the active material layer. A preparation method of the isolation layer included the following steps: weighting and mixing a conductive agent or a solid electrolyte and the binder, PVDF, wherein a mass ratio of the conductive agent or the solid electrolyte to the binder was 85:15, and then adding the solvent, NMP, to prepare a slurry, which was coated on the active material layer and then dried to obtain the isolation layer; or weighting and mixing a combination of the conductive agent and the solid electrolyte and the binder, PVDF, wherein a mass ratio of the combination of the conductive agent and the solid electrolyte to the binder was 90:10, and then adding the solvent, NMP, to prepare a slurry, which was coated on the active material layer and then dried to obtain the isolation layer.
(3) fabricating a cathode lithium replenishment layer on a surface of the isolation layer. A preparation method of the cathode lithium replenishment layer included the following steps: weighting and mixing a reducing agent and a lithium-containing compound, the conductive agent, i.e., conductive carbon black Super-P, and the binder, i.e., PVDF, at a mass ratio of 80:15:15, and then adding NMP to prepare a slurry, which was coated on the isolation layer and then dried to obtain the cathode lithium replenishment layer.

Raw materials and contents thereof were shown in Table 1.

**Table 1**

| Product | Cathode active material in active material layer | Thickness of active material layer, µm | Conductive agent in isolation layer | Solid electrolyte in isolation layer | Mass ratio of conductive agent to solid electrolyte | Thickness of isolation layer, µm | Lithium-containing compound and reducing agent in cathode lithium replenishment layer | Thickness of cathode lithium replenishment layer, µm |
|---|---|---|---|---|---|---|---|---|
| Example 1 | LiNi_{0.5}Mn_{1.5}O₄ | 150 | Conductive carbon | | | 10 | Li₄SiO₄:S (95:5) | 20 |
| | | | black Super-P | | | | | |
| Example 2 | LiCoO₂ | 125 | Conductive carbon black Super-P | | | 8 | Li₄SiO₄:S (95:5) | 15 |
| Example 3 | LiNiO₂ | 125 | Conductive carbon black Super-P | | | 8 | Li₄SiO₄:S (95:5) | 18 |
| Example 4 | NCM811 (lithium nickel manganese cobalt oxide) | 125 | Conductive carbon black Super-P | | | 8 | Li₄SiO₄:S (95:5) | 20 |
| Example 5 | LiNi_{0.5}Mn_{1.5}O₄ | 150 | Conductive carbon black Super-P | | | 10 | Li₅FeO₄:S (95:5) | 20 |
| Example 6 | LiNi_{0.5}Mn_{1.5}O₄ | 150 | carbon nanotube | | | 10 | Li₄SiO₄:S (95:5) | 20 |
| Example 7 | LiNi_{0.5}Mn_{1.5}O₄ | 150 | Conductive carbon black Super-P | LLZO solid electrolyte | 1:8 | 8 | Li₄SiO₄:S (95:5) | 20 |
| Example 8 | NCM811 (lithium nickel manganese cobalt oxide) | 125 | Conductive carbon black Super-P | | | 8 | Li₄SiO₄:S (95:5) | 20 |
| Example 9 | NCM811 (lithium nickel manganese cobalt oxide) | 125 | | LATP solid electrolyte | | 8 | Li₄SiO₄:S (95:5) | 20 |
| Example 10 | NCM811 (lithium nickel manganese cobalt oxide) | 125 | Conductive carbon black Super-P | LATP solid electrolyte | 2:8 | 8 | Li₄SiO₄:S (95:5) | 20 |
| Example 11 | NCM811 (lithium nickel manganese cobalt oxide) | 125 | Graphene | | | 8 | Li₄SiO₄:S (95:5) | 20 |
| Example 12 | NCM811 (lithium nickel manganese cobalt oxide) | 125 | Graphene | LATP solid electrolyte | 2:8 | 8 | Li₄SiO₄:S (95:5) | 20 |
| Example 13 | NCM811 (lithium nickel manganese cobalt oxide) | 125 | Carbon fiber | | | 8 | Li₄SiO₄:S (95:5) | 20 |
| Example 14 | NCM811 (lithium nickel manganese cobalt oxide) | 125 | Carbon fiber | LATP solid electrolyte | 2:8 | 8 | Li₄SiO₄:S (95:5) | 20 |
| Example 15 | NCM811 (lithium nickel manganese cobalt oxide) | 125 | Carbon nanotube | | | 8 | Li₄SiO₄:S (95:5) | 20 |
| Example 16 | NCM811 (lithium nickel manganese cobalt oxide) | 125 | Carbon nanotube | LATP solid electrolyte | 2:8 | 8 | Li₄SiO₄:S (95:5) | 20 |
| Example 17 | NCM811 (lithium nickel manganese cobalt oxide) | 125 | Carbon nanotube | LLZO solid electrolyte | 2:8 | 8 | Li₄SiO₄:S (95:5) | 20 |
| Example 18 | NCM811 (lithium nickel manganese cobalt oxide) | 125 | Carbon nanotube | Li₃InCl₆ solid electrolyte | 2:8 | 8 | Li₄SiO₄:S (95:5) | 20 |
| Example 19 | NCM811 (lithium nickel manganese cobalt oxide) | 125 | Carbon nanotube | PEO solid electrolyte | 2:8 | 8 | Li₄SiO₄:S (95:5) | 20 |
| Example 20 | NCM811 (lithium nickel manganese cobalt oxide) | 125 | Carbon nanotube | LATP solid electrolyte | 1:9 | 8 | Li₄SiO₄:S (95:5) | 20 |
| Example 21 | NCM811 (lithium nickel manganese cobalt oxide) | 125 | Carbon nanotube | LATP solid electrolyte | 3:7 | 8 | Li₄SiO₄:S (95:5) | 20 |
| Example 22 | NCM811 (lithium nickel manganese cobalt oxide) | 125 | Carbon nanotube | LATP solid electrolyte | 4:6 | 8 | Li₄SiO₄:S (95:5) | 20 |
| Example 23 | NCM811 (lithium nickel manganese cobalt oxide) | 125 | Carbon nanotube | LATP solid electrolyte | 5:5 | 8 | Li₄SiO₄:S (95:5) | 20 |
| Example 24 | NCM811 (lithium nickel manganese cobalt oxide) | 125 | Carbon nanotube | LATP solid electrolyte | 0.5:9.5 | 8 | Li₄SiO₄:S (95:5) | 20 |
| Example 25 | NCM811 (lithium nickel manganese cobalt oxide) | 125 | Carbon nanotube | LiMnPO₄ | 2:8 | 8 | Li₄SiO₄:S (95:5) | 20 |
| Example 26 | NCM811 (lithium nickel manganese cobalt oxide) | 125 | Carbon nanotube | LiFePO₄ | 2:8 | 8 | Li₄SiO₄:S (95:5) | 20 |
| Example 27 | NCM811 (lithium nickel manganese cobalt oxide) | 125 | Carbon nanotube | LiMn_{0.5} Fe_{0.5} PO₄ | 2:8 | 8 | Li₄SiO₄:S (95:5) | 20 |
| Example 28 | NCM811 (lithium nickel manganese cobalt oxide) | 125 | Carbon nanotube | Li₃V₂(PO₄)₃ | 2:8 | 8 | Li₄SiO₄:S (95:5) | 20 |
| Example 29 | NCM811 (lithium nickel manganese cobalt oxide) | 125 | Carbon nanotube | LiCoPO₄ | 2:8 | 8 | Li₄SiO₄:S (95:5) | 20 |
| Example 30 | NCM811 (lithium nickel manganese cobalt oxide) | 125 | Carbon nanotube | LiNiPO₄ | 2:8 | 8 | Li₄SiO₄:S (95:5) | 20 |

### Comparative Example 1

A cathode sheet and a preparation method thereof were provided. The preparation method of the cathode sheet described in Comparative Example 1 included the following steps:
(1) fabricating a cathode lithium replenishment layer on a 12 µm aluminum foil. A preparation method of the cathode lithium replenishment layer included the following steps: weighting and mixing a reducing agent and a lithium-containing compound, a conductive agent, i.e., conductive carbon black Super-P, and a binder, i.e., PVDF, at a mass ratio of 80:15:15, and then adding a solvent, NMP, to prepare a slurry, which was coated on the aluminum foil and then dried to obtain the cathode lithium replenishment layer;
(2) fabricating an isolation layer on a surface of the cathode lithium replenishment layer. A preparation method of the isolation layer included the following steps: weighting and mixing a conductive agent and the binder, PVDF, at a mass ratio of 85:15, and then adding the solvent, NMP, to prepare a slurry, which was coated on the cathode lithium replenishment layer and then dried to obtain the isolation layer.
(3) fabricating an active material layer on a surface of the isolation layer. A preparation method of the active material layer included the following steps: weighting and mixing a cathode active material, the conductive agent, i.e., conductive carbon black Super-P and the binder, i.e., PVDF, which were all commercially available, at a mass ratio of 95:2:3, and then adding a solvent, NMP, to prepare a slurry, which was coated on the isolation layer and then dried to obtain the active material layer.

A thickness of each layer was the same as that of the corresponding layer in Example 1. The only difference between Comparative Example 1 and Example 1 was that the structural layers of the cathode sheet of Comparative Example 1 were fabricated in a different order.

### Comparative Example 2

A cathode sheet and a preparation method thereof were provided. The preparation method of the cathode sheet in Comparative Example 2 included the following steps:
(1) fabricating an active material layer on a 12 µm aluminum foil. A preparation method of the active material layer included the following steps: weighting and mixing a cathode active material, a conductive agent, i.e., conductive carbon black Super-P and a binder, i.e., PVDF, which were all commercially available, at a mass ratio of 95:2:3, and then adding a solvent, NMP, to prepare a slurry, which was coated on the aluminum foil and then dried to obtain the active material layer.
(2) fabricating a cathode lithium replenishment layer on a surface of the active material layer. A preparation method of the cathode lithium replenishment layer included the following steps: weighting and mixing a reducing agent and a lithium-containing compound, the conductive agent, i.e., conductive carbon black Super-P, and the binder, i.e., PVDF, at a mass ratio of 80:15:15, and then adding the solvent, NMP, to prepare a slurry, which was coated on the active material layer and then dried to obtain the cathode lithium replenishment layer.
(3) fabricating an isolation layer on a surface of the cathode lithium replenishment layer. A preparation method of the isolation layer included the following steps: weighting and mixing a conductive agent and the binder, PVDF, at a mass ratio of 85:15, and then adding the solvent, NMP, to prepare a slurry, which was coated on the cathode lithium replenishment layer and then dried to obtain the isolation layer.

A thickness of each layer was the same as that of the corresponding layer in Example 1. The only difference between Comparative Example 2 and Example 1 was that the structural layers of the cathode sheet of Comparative Example 2 were fabricated in a different order.

### Effect Example 1

In order to verify usage effects of the cathode sheet of the present disclosure, the cathode sheet prepared in each of the examples and comparative examples was used to prepare a lithium-ion battery. A specific method was shown as following.
mixing and slurring commercial graphite, conductive carbon black and a binder, PVDF, at a mass ratio of 93:2:5 to obtain a slurry, then coating the slurry to obtain an anode sheet, and assembling the anode sheet and the cathode sheet prepared in each of the examples and comparative example in a glove box to obtain a coin cell, wherein a solution of 1M LiPF₆ in a mixture of ethylene carbonate (EC) and dimethyl carbonate (DMC) at a volume ratio of 1:1 was used as an electrolyte (purchased from BASF SE, Germany). With regard to various kinds of cathode materials, such as, lithium nickel manganese oxide (LNMO), ternary cathode material, lithium cobalt oxide and lithium nickel oxide used in the coin cells, these coin cells were respectively tested according to the following testing methods, after each coin cell had rested for 24 hours. As the theoretical specific capacity of LNMO was calculated to be 146.7 mAh/g, the coin cells using LNMO as a cathode material were first charged and discharged with a working voltage of 3.0-4.85 V at a C-rate of 0.05C; then the C-rate was increased to 0.2C, and the coin cells were further charged and discharged at a C-rate of 0.2C for 100 cycles; the initial charge capacity and initial discharge capacity were calculated for the first charge and discharge cycle, and the discharge capacity after 100 cycles was also calculated. As the theoretical specific capacity of a ternary cathode material was calculated to be 210 mAh/g, the coin cells using the ternary cathode material as a cathode material were first charged and discharged with a working voltage of 2.75-4.3 V at a C-rate of 0.05C; then the C-rate was increased to 0.2C, and the coin cells were further charged and discharged at a C-rate of 0.2C for 100 cycles; the initial charge capacity and initial discharge capacity were calculated for the first charge and discharge cycle, and the discharge capacity after 100 cycles was also calculated. As the theoretical specific capacity of lithium cobalt oxide is calculated to be 200 mAh/g, the coin cells using lithium cobalt oxide as a cathode material were first charged and discharged with a working voltage of 3-4.45 V at a C-rate of 0.05C; then the C-rate was increased to 0.2C, and the coin cells were further charged and discharged at a C-rate of 0.2C for 100 cycles; the initial charge capacity and initial discharge capacity were calculated for the first charge and discharge cycle, and the discharge capacity after 100 cycles was also calculated. As the theoretical specific capacity of lithium nickel oxide is calculated to be 220 mAh/g, the coin cells using lithium nickel oxide as a cathode material were first charged and discharged with a working voltage of 2.75~4.3V at a C-rate of 0.05C; then the C-rate was increased to 0.2C, and the coin cells were further charged and discharged at a C-rate of 0.2C for 100 cycles; the initial charge capacity and initial discharge capacity were calculated for the first charge and discharge cycle, and the discharge capacity after 100 cycles was also calculated.

At the same time, in order to facilitate the comparison of functionality of various structural layers in the products, semi-finished products prepared in Step (1) and/or Step (2) of Examples 1-8 and Comparative examples 1-2 were used as cathode sheets and tested, and named with "Step (1)" and "Step (2)", respectively (for example, in Step (1) of Example 1, a cathode sheet only comprising a current collector and an active material layer was obtained, and such a semi-finished product was subjected to the same testing and named as Example 1-(1)).

Results were shown in Table 2.

**Table 2**

| Product | Structural layer | Initial charge capacity, mAh/g | Initial discharge capacity, mAh/g | Discharge capacity of 100th cycle, mAh/g |
|---|---|---|---|---|
| Example 1-(1) | active material layer | 143.8 | 123.1 | 118.5 |
| Example 1-(2) | active material layer-isolation layer | 135.2 | 115.6 | 103.2 |
| Example 1 | active material layer-isolation layer-cathode lithium replenishment layer | 170.2 | 134.3 | 129.6 |
| Example 2-(1) | active material layer | 201.8 | 191.5 | 182.5 |
| Example 2-(2) | active material layer-isolation layer | 198.6 | 182.2 | 168.9 |
| Example 2 | active material layer-isolation layer-cathode lithium replenishment layer | 252.4 | 198.6 | 195.6 |
| Example 3-(1) | active material layer | 215.8 | 205.6 | 191.4 |
| Example 3-(2) | active material layer-isolation layer | 198.6 | 189.2 | 171.3 |
| Example 3 | active material layer-isolation layer-cathode lithium replenishment layer | 262.4 | 210.6 | 201.6 |
| Example 4-(1) | active material layer | 220.2 | 195.5 | 182.6 |
| Example 4-(2) | active material layer-isolation layer | 220.3 | 191.2 | 176.3 |
| Example 4 | active material layer-isolation layer-cathode lithium replenishment layer | 265.8 | 201.6 | 192.8 |
| Example 5-(1) | active material layer | 144.2 | 124.3 | 119.2 |
| Example 5-(2) | active material layer-isolation layer | 132.8 | 118.4 | 104.8 |
| Example 5 | active material layer-isolation layer-cathode lithium replenishment layer | 198.5 | 134.3 | 130.3 |
| Example 6-(1) | active material layer | 145.7 | 125.6 | 120.6 |
| Example 6-(2) | active material layer- isolation layer | 131.3 | 117.8 | 105.7 |
| Example 6 | active material layer-isolation layer-cathode lithium replenishment layer | 174.8 | 135.5 | 132.2 |
| Example 7-(1) | active material layer | 144.5 | 126.7 | 121.6 |
| Example 7-(2) | active material layer-isolation layer | 134.5 | 119.8 | 110.1 |
| Example 7 | active material layer-isolation layer-cathode lithium replenishment layer | 179.5 | 135.2 | 135.0 |
| Example 8-(1) | active material layer | 220.8 | 192.2 | 181.2 |
| Example 8 | active material layer-isolation layer | 259.3 | 198.3 | 191.3 |
| Example 9 | active material layer-isolation layer-cathode lithium replenishment layer | 260.3 | 200.6 | 192.8 |
| Example 10 | active material layer-isolation layer-cathode lithium replenishment layer | 259.4 | 202.1 | 195.5 |
| Example 11 | active material layer-isolation layer-cathode lithium replenishment layer | 254.3 | 196.5 | 188.3 |
| Example 12 | active material layer-isolation layer-cathode lithium replenishment layer | 256.2 | 198.3 | 190.4 |
| Example 13 | active material layer-isolation layer-cathode lithium replenishment layer | 253.4 | 196.8 | 190.2 |
| Example 14 | active material layer-isolation layer-cathode lithium replenishment layer | 255.8 | 199.6 | 193.1 |
| Example 15 | active material layer-isolation layer-cathode lithium replenishment layer | 261.3 | 201.5 | 195.6 |
| Example 16 | active material layer-isolation layer-cathode lithium replenishment layer | 263.5 | 205.4 | 205.2 |
| Example 17 | active material layer-isolation layer-cathode lithium replenishment layer | 260.8 | 204.1 | 201.8 |
| Example 18 | active material layer-isolation layer-cathode lithium replenishment layer | 258.6 | 202.3 | 199.8 |
| Example 19 | active material layer-isolation layer-cathode lithium replenishment layer | 256.3 | 201.9 | 199.2 |
| Example 20 | active material layer-isolation layer-cathode lithium replenishment layer | 261.3 | 205.2 | 204.8 |
| Example 21 | active material layer-isolation layer-cathode lithium replenishment layer | 260.8 | 204.8 | 204.5 |
| Example 22 | active material layer-isolation layer-cathode lithium replenishment layer | 258.6 | 203.2 | 202.8 |
| Example 23 | active material layer-isolation layer-cathode lithium replenishment layer | 256.8 | 202.1 | 196.8 |
| Example 24 | active material layer-isolation layer-cathode lithium replenishment layer | 258.6 | 200.6 | 196.2 |
| Example 25 | active material layer-isolation layer-cathode lithium replenishment layer | 253.2 | 202.8 | 197.1 |
| Example 26 | active material layer-isolation layer-cathode lithium replenishment layer | 255.3 | 203.8 | 198.5 |
| Example 27 | active material layer-isolation layer-cathode lithium replenishment layer | 253.6 | 202.5 | 197.8 |
| Example 28 | active material layer-isolation layer-cathode lithium replenishment layer | 253.3 | 201.3 | 196.6 |
| Example 29 | active material layer-isolation layer-cathode lithium replenishment layer | 253.9 | 201.8 | 197.3 |
| Example 30 | active material layer-isolation layer-cathode lithium replenishment layer | 252.3 | 201.6 | 196.8 |
| Comparative Example 1-(1) | cathode lithium replenishment layer | 536.7 | 21.6 | 0 |
| Comparative Example 1-(2) | cathode lithium replenishment layer-isolation layer | 551.9 | 23.8 | 0 |
| Comparative Example 1 | cathode lithium replenishment layer-isolation layer-active material layer | 158.8 | 125.7 | 118.5 |
| Comparative Example 2-(1) | active material layer | 144.8 | 127.6 | 122.3 |
| Comparative Example 2-(2) | active material layer-cathode lithium replenishment layer | 148.3 | 125.8 | 118.6 |
| Comparative Example 2 | active material layer-cathode lithium replenishment layer-isolation layer | 178.8 | 130.7 | 119.8 |

It could be seen from the performance of various cathode sheets in Table 2 that, with different thicknesses and different composition for active material layers, isolation layers and cathode lithium replenishment layers, compared with cathode sheets having a structure arrangement of a current collector-an active material layer and cathode sheets having a structure arrangement of a current collector-an active material layer-an isolation layer, the cathode sheet prepared in each of the examples of the present disclosure had significantly improved initial coulombic efficiency and significantly improved cycling stability, which indicated that in the cathode sheet prepared in each of the examples of the present disclosure, the cathode lithium replenishment layer could effectively realize lithium replenishment and the resulting product had a high content of lithium ion for reversible delithiation/lithiation under the combined action of the isolation layer and the cathode lithium replenishment layer, thereby achieving conduction between the cathode and the anode for a long period. When a conductive agent and a solid electrolyte were combined to serve as composition of the isolation layer, the resulting product had a higher performance improvement, compared with those just adopting a conductive agent or a solid electrolyte as composition of the isolation layer. Further, when different conductive agents and/or different solid electrolytes are served as composition of isolation layers, the cathode sheets comprising such isolation layers also have different electrochemical properties. According to the performance of the products prepared in Examples 8-19, it can be seen that, when the conductive agent was a carbon nanotube and served as composition of the isolation layer alone, the discharge capacity of the resulting product could still reach 195.6 mAh/g after 100 cycles; and when the conductive agent was a carbon nanotube and combined with a solid electrolyte to serve as composition of the isolation layer, the electrochemical performance of the resulting product was further improved. Further, when the carbon nanotube and the LATP solid electrolyte were combined to serve as composition of the isolation layer, the discharge capacity of the resulting product could reach a higher value, 205.2 mAh/g, after 100 cycles, which was much higher than that of the resulting products in cases where the carbon nanotube was combined with other solid electrolytes to serve as composition of the isolation layer. However, if a mass ratio of the conductive agent to the LATP solid electrolyte was not in a range of from (1:9) to (4:6), an optimal performance improvement may not be achieved. As shown in Examples 23-24, there was little difference in performance between the products prepared in Examples 23-24 and the products prepared in Example 9 and Example 15 where the conductive agent or the solid electrolyte was used as composition of the isolation layer alone. In addition, it was proved by Examples 25-30 that polyanionic phosphates, such as, lithium iron phosphate, lithium manganese phosphate, lithium manganese iron phosphate, lithium vanadium phosphate, lithium cobalt phosphate and nickel phosphate lithium, could achieve the same effect, when they each were served as composition of the isolation layer.

In contrast, in Comparative Example 1, when fabricating the structural layers, the product was prepared to have a structure arrangement of a current collector-a cathode lithium replenishment layer-an isolation layer-an active material layer. Although the product of Comparative Example 1 also had the lithium replenishment layer and the isolation layer, it had poor electrochemical performance. Obviously, the above mentioned two layers in the structure arrangement did not effectively inhibit the direct contact between the active material layer and the electrolyte. The product of Comparative Example 1 even had equivalent performance to that of the cathode sheet which just contained a current collector and an active material layer and was obtained in step (1) of Example 1. Similarly, the cathode sheet obtained in Comparative Example 2 with an inappropriate structure arrangement did not have ideal lithium replenishment performance, either.

Further, in order to separately explore the functionality of the isolation layer in the cathode sheet of the present disclosure, comparative products 1-7 were prepared according to methods similar to those described in Examples 1-7. The only difference between these comparative products 1-7 and the corresponding products prepared in Examples 1-7 was that, in the preparation method, after an active material layer was fabricated on a current collector, an isolation layer was not fabricated on the active material layer, but a cathode lithium replenishment layer was directly fabricated on the active material layer. Other parameters and process methods were the same as those in the corresponding Examples 1-7. Similarly, the comparative product 8 was prepared according to a method similar to that described in Comparative Example 1. The only difference between this comparative product 8 and the product of Comparative Example 1 was that, in the preparation method, after the cathode lithium replenishment layer was fabricated on the current collector, an active material was directly further fabricated. Other parameters and process methods were the same as those in Comparative Example 1. Further, with reference to Example 26, a comparative product 26 was prepared, by directly adding the lithium iron phosphate from the isolation layer to the ternary active material, without providing an isolation layer, and then fabricating a cathode lithium replenishment layer on a surface of the active material.

The comparative products 1-8 were subjected to the same testing as mentioned above, and results were shown in Table 3.

**Table 3**

| Product | Initial charge capacity, mAh/g | Initial discharge capacity, mAh/g | Discharge capacity of 100th cycle, mAh/g |
|---|---|---|---|
| Comparative product 1 | 153.4 | 128.7 | 121.3 |
| Comparative product 2 | 221.6 | 192.3 | 182.8 |
| Comparative product 3 | 165.5 | 148.2 | 143.5 |
| Comparative product 4 | 239.4 | 198.1 | 176.8 |
| Comparative product 5 | 153.4 | 128.7 | 121.3 |
| Comparative product 6 | 152.8 | 129.6 | 122.8 |
| Comparative product 7 | 153.7 | 129.4 | 120.5 |
| Comparative product 8 | 153.6 | 121.5 | 112.6 |
| Comparative product 26 | 241.2 | 193.5 | 171.8 |

From the comparison between the testing results shown in Table 3 and Table 2, it could be seen that the isolation layer of the present disclosure did not only function as a conventional conductive agent in the cathode sheet. Taking the testing results of the product prepared in Example 1 and the comparative product 1 as an example, it could be seen that the cathode lithium replenishment layer had a very limited lithium replenishment effect for the entire coin cell, in the absence of an isolation layer. Both the initial capacity and the retained capacity after 100 cycles were close to those of the cathode sheet only comprising a current collector and an active material layer. However, after an isolation layer was provided, the performance of the product prepared in Example 1 was significantly improved. Further, compared with the product prepared in Comparative Example 1, the comparative product 8 had also showed performance degradation, which indicated that the isolation layer of the present disclosure also effectively inhibited the cathode lithium replenishment layer and its resulting reaction products from being in contact with the active material layer, thereby avoiding mutual side reactions between the two structural layers. In addition, comparison between the comparative product 26 and the product prepared in Example 26 indicated that, after an isolation layer comprising lithium iron phosphate was provided, the performance of the product prepared in Example 26 was also significantly improved, so lithium iron phosphate as the isolation layer was not only used as an active material.

Finally, it should be noted that the above examples are only intended to illustrate the technical solutions of the present disclosure, rather than to limit the protection scope of the present disclosure. Although the present disclosure has been described in detail with reference to the preferred embodiments, those skilled in the art should understand that the technical solution of the present disclosure may be modified or equivalently substituted, without departing from the essence and scope of the technical solutions of the present disclosure.

## Claims

1. A cathode sheet, comprising a current collector, an active material layer, an isolation layer and a cathode lithium replenishment layer, which are stacked in sequence;
wherein the isolation layer comprises at least one selected from the group consisting of a conductive agent, a solid electrolyte, and a polyanionic phosphate; and
the cathode lithium replenishment layer comprises a lithium-containing compound and a reducing agent.

2. The cathode sheet according to claim 1, wherein the active material layer comprises a cathode active material, which is a doped or undoped material and comprises at least one selected from the group consisting of lithium cobalt oxide, lithium nickel oxide, lithium manganese oxide, a ternary cathode material, lithium nickel manganese oxide, and a lithium-rich material.

3. The cathode sheet according to claim 2, wherein the conductive agent is at least one selected from the group consisting of conductive carbon black, a carbon nanotube, graphene and a carbon nanofiber;
the solid electrolyte is at least one selected from the group consisting of an oxide solid electrolyte, a chloride solid electrolyte and a polymer solid electrolyte; and
the polyanionic phosphate is at least one selected from the group consisting of lithium iron phosphate, lithium manganese phosphate, lithium manganese iron phosphate, lithium vanadium phosphate, lithium cobalt phosphate and lithium nickel phosphate.

4. The cathode sheet according to claim 3, wherein the isolation layer comprises a conductive agent and a solid electrolyte.

5. The cathode sheet according to claim 3, wherein the solid electrolyte comprises a coated solid electrolyte.

6. The cathode sheet according to claim 4, wherein the isolation layer comprises a carbon nanotube and a LATP solid electrolyte, and a mass ratio of the carbon nanotube to the LATP solid electrolyte is in a range of from (1:9) to (4:6).

7. The cathode sheet according to claim 6, wherein the isolation layer comprises the carbon nanotube and the LATP solid electrolyte, and the mass ratio of the carbon nanotube to the LATP solid electrolyte is 2:8;
the cathode active material is a ternary cathode material and/or a lithium nickel manganese oxide; and
the cathode lithium replenishment layer comprises Li₄SiO₄ and elemental sulfur.

8. The cathode sheet according to claim 1, wherein the lithium-containing compound is LiₐM_{b}O_{c}, where a=1-12, M is at least one selected from the group consisting of Ni, Cu, Mo, V, Ru, Mn, Si, Nb, Ti, Fe, Ta, Re, Co, W, Zr, Bi, Sn and Ce, b=0-2, and c=0-11; and
the reducing agent is at least one selected from the group consisting of boride, sulfide, phosphide and a reducing elementary substance.

9. The cathode sheet according to claim 1, wherein in the cathode sheet, a thickness of the active material layer is in a range of from 20µm to 300 µm, a thickness of the isolation layer is in a range of from 0.5µm to 20 µm, and a thickness of the cathode lithium replenishment layer is in a range of from 1µm to 50 µm.

10. A preparation method of the cathode sheet according to any one of claims 1-9, comprising following steps:
fabricating the active material layer on the current collector;
fabricating the isolation layer on the active material layer; and
fabricating the cathode lithium replenishment layer on the isolation layer.

11. A secondary battery, comprising the cathode sheet according to any one of claims 1-9, a separator and an anode sheet.

12. An electric device, comprising the secondary battery according to claim 11, wherein the secondary battery is used as a power supply for the electric device.
